# EUROPEAN PATENT APPLICATION

(11) **EP 4 783 012 A1**
(43) Date of publication of application: **29.07.2026**
(21) Application number: 25227764.5
(22) Date of filing: 30.12.2025
(51) Int. Cl.: G06F 11/30, G06F 11/34

(54) **DATA LOGGING FOR CLOUD PLATFORMS**

(30) Priority: 24.01.2025 US 202519036205
(71) Applicant: Capital One Services, LLC, McLean, Virginia 22102 (US)
(72) Inventor: HALLUR, Jayanna Chandrashekar, McLean, VA 22102 (US); HAMEED BALYAH, Ibrahim Abdul Cader Nawaz, McLean, VA 22102 (US); RAVALA, Yasaswy Rajendraprasad, McLean, VA 22102 (US); WINTER, Samuel, McLean, VA 22102 (US); ARUNARASU, Sivasomasundari, McLean, VA 22102 (US)
(74) Representative: Boult Wade Tennant LLP

(57) **Abstract**

In some implementations, a device may receive information identifying a cloud platform associated with generating a data log. The device may identify an application programming interface (API) associated with the cloud platform. The device may establish, using the API associated with the cloud platform, a listener service associated with receiving the data log asynchronously to an execution of a particular type of function in a cloud environment associated with the cloud platform. The device may receive, based on establishing the listener service and based on the execution of the particular type of function, the data log. The device may forward, to a primary endpoint associated with a data log platform and a failover endpoint associated with a data storage platform, and based on receiving the data log, information associated with the data log.

## Description

### BACKGROUND

A data log may include a record of events that occur in connection with execution of code. For example, when an application is being executed on a computing system, the application may generate log data that is stored in the data log. The log data may include information identifying one or more functions that have executed, information identifying a timing or duration of function execution, information identifying a resource utilization associated with function execution, or another parameter. Log data may be used to analyze errors in application execution and/or optimize or schedule subsequent utilization of an application. For example, a machine learning algorithm may use log data as an input and may generate a recommendation of an order with which to execute a set of applications to optimize a utilization of available computing resources. Additionally, or alternatively, a user may analyze log data to identify a source of a set of errors and may generate new code to resolve the set of errors.

### SUMMARY

Some implementations described herein relate to a system for cloud platform data logging. The system may include one or more memories and one or more processors communicatively coupled to the one or more memories. The one or more processors may be configured to receive information identifying a cloud platform associated with generating a data log. The one or more processors may be configured to identify an application programming interface (API) associated with the cloud platform. The one or more processors may be configured to establish, using the API associated with the cloud platform, a listener service associated with receiving the data log asynchronously to an execution of a particular type of function in a cloud environment associated with the cloud platform. The one or more processors may be configured to receive, based on establishing the listener service and based on the execution of the particular type of function, the data log. The one or more processors may be configured to forward, to a data log platform and based on receiving the data log, information associated with the data log.

Some implementations described herein relate to a non-transitory computer-readable medium that stores a set of instructions. The set of instructions, when executed by one or more processors of a system, may cause the system to receive a configuration file identifying a set of configuration settings for data logging of a runtime function associated with execution in a cloud computing environment of a cloud platform. The set of instructions, when executed by one or more processors of the system, may cause the system to extract, from the configuration file, the set of configuration settings. The set of instructions, when executed by one or more processors of the system, may cause the system to configure, using the set of configuration settings, a listener service associated with receiving a data log in connection with an execution of the runtime function in the cloud environment associated with the cloud platform. The set of instructions, when executed by one or more processors of the system, may cause the system to receive, based on establishing the listener service and based on the execution of the runtime function, the data log. The set of instructions, when executed by one or more processors of the system, may cause the system to forward, to a data log platform and based on receiving the data log, information associated with the data log.

Some implementations described herein relate to a method. The method may include receiving, by a device, information identifying a cloud platform associated with generating a data log. The method may include identifying, by the device, an API associated with the cloud platform. The method may include establishing, by the device and using the API associated with the cloud platform, a listener service associated with receiving the data log asynchronously to an execution of a particular type of function in a cloud environment associated with the cloud platform. The method may include receiving, by the device and based on establishing the listener service and based on the execution of the particular type of function, the data log. The method may include forwarding, by the device, to a primary endpoint associated with a data log platform and a failover endpoint associated with a data storage platform, and based on receiving the data log, information associated with the data log.

### BRIEF DESCRIPTION OF THE DRAWINGS

Figs. 1A-1E are diagrams of an example implementation associated with data logging for cloud platforms, in accordance with some embodiments of the present disclosure.
Fig. 2 is a diagram of an example environment in which systems and/or methods described herein may be implemented, in accordance with some embodiments of the present disclosure.
Fig. 3 is a diagram of example components of a device associated with data logging for cloud platforms, in accordance with some embodiments of the present disclosure.
Fig. 4 is a flowchart of an example process associated with data logging for cloud platforms, in accordance with some embodiments of the present disclosure.

### DETAILED DESCRIPTION

The following detailed description of example implementations refers to the accompanying drawings. The same reference numbers in different drawings may identify the same or similar elements.

Some cloud computing platforms may provide a functionality for operating a serverless computing service that is deployed via a cloud computing environment. For example, a function as a service (FaaS) provider may provide a feature in which a function can run code as a response to an occurrence of an event, with resource management occurring transparent to the developer of the code. One example of such a serverless FaaS function is Amazon Web Services (AWS) Lambda. A FaaS function may host the code for performing one or more functionalities and may provide underlying cloud computing resource management for the code, rather than the code explicitly having functionalities for cloud computing resource management. This may facilitate the rapid deployment of different functionalities for entities or organizations that use cloud computing platforms.

When a FaaS function is used to deploy applications, the FaaS function may generate a data log during execution of code associated with an application. The data log may include a system log, an error log, an application or function log, or another type of log. The data log may have parameters that can be used for debugging errors in the code, optimizing execution of the code, tracking resource utilization for the code, billing for resource utilization, or other purposes. When a data log is generated, the FaaS function may automatically forward the data log to a log group visualization platform that is linked with the FaaS function and the associated application. The log group visualization platform may provide visualizations of the data log and may store the data log in a proprietary format.

However, utilization of a log group visualization platform may result in exposure of log data to an outside entity that provides the log group visualization platform. For example, the log group visualization platform may be operated by a third party entity (e.g., an entity different from the FaaS function provider and the owner of the code that is being executed). Accordingly, sending logs to the log group visualization platform may represent a security risk when the code is associated with using private information, such as financial information, health information, intellectual property, or other controlled information. Additionally, or alternatively, the log group visualization platform may use a proprietary format for storing the data log or may store the data log in a format native to the FaaS function. In this case, the data log may not be usable by, for example, machine learning functions associated with resolving errors or optimizing execution of code. Furthermore, failures associated with the third party entity may result in loss of the data log, which may prevent utilization of the data log to resolve errors or optimize code.

Some implementations described herein provide a data log platform. For example, the data log platform may use an application programming interface (API) associated with a cloud platform to establish a listener (e.g., a listener service) to obtain data logs associated with execution of code, such as in connection with a FaaS function or a Lambda function. The data log platform may convert a format of the data log from a first format associated with the cloud platform to a second platform that is usable by, for example, a machine learning algorithm. The data log platform may store the data log using a primary endpoint and a secondary endpoint to provide redundancy and seamless failover functionality. In this way, the data log platform may ensure data security, enable utilization of a data log for error correction or code execution optimization, and/or reduce a likelihood of a failure, relative to other techniques for managing a data log.

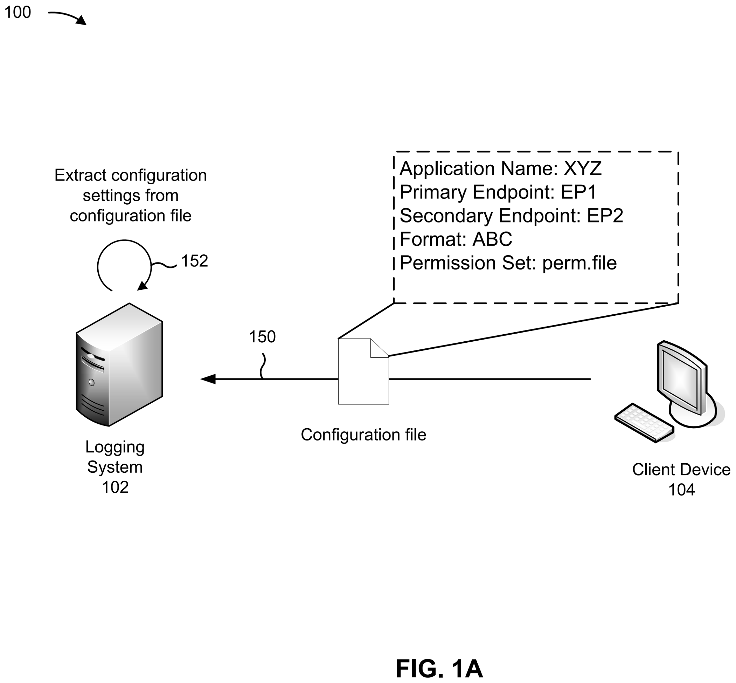

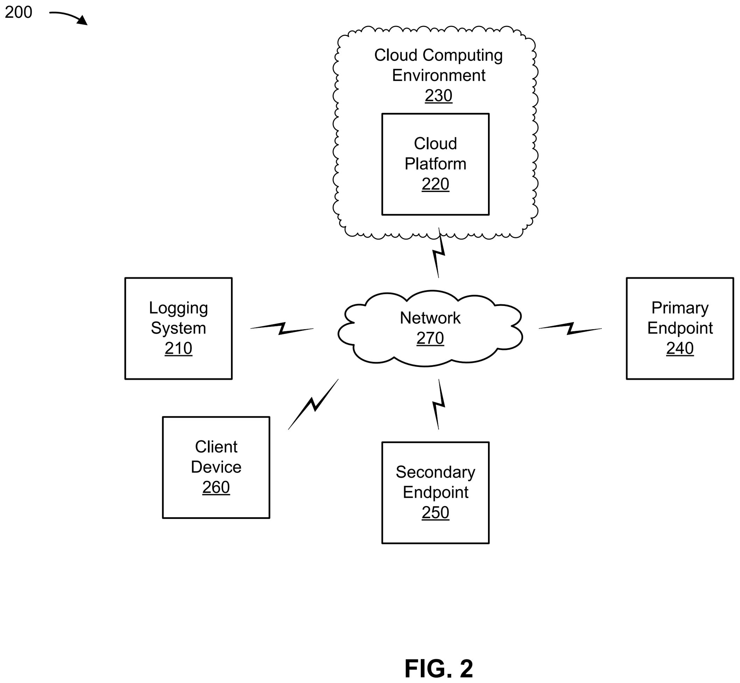

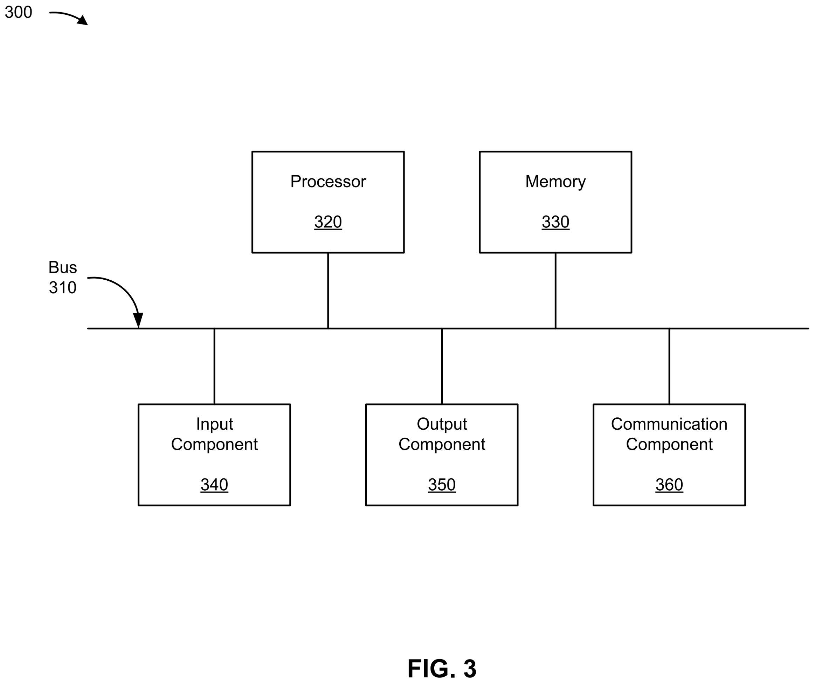

Figs. 1A-1E are diagrams of an example implementation 100 associated with data logging for cloud platforms. As shown in Figs. 1A, example implementation 100 includes a logging system 102 and a client device 104. These devices are described in more detail below in connection with Fig. 2 and Fig. 3.

As further shown in Fig. 1A, and by reference number 150, the logging system 102 may receive configuration information. For example, the logging system 102 may receive information, such as a configuration file, identifying a cloud platform associated with generating a data log. In some implementations, the logging system 102 may receive the configuration information from the client device 104. For example, the logging system 102 may receive a configuration file with a set of parameters associated with data logging for a cloud platform. In some implementations, the configuration file is generated in connection with an onboarding process. For example, the logging system 102 may generate a user interface and provide the user interface for display via the client device 104. In this case, the logging system 102 may receive, via the user interface, input indicating a set of parameters.

As further shown in Fig. 1A, and by reference number 152, the logging system 102 may determine a configuration for data logging. For example, the logging system 102 may extract configuration settings from a configuration file received from the client device 104. In this case, the configuration file may include information identifying an application name of an application for which data logging is to be performed, a primary endpoint that is to receive a data log, a secondary endpoint that is to receive the data log, a format for the data log, or a set of permissions associated with the data log, among other examples. As a particular example, the logging system 102 may configure, as an output format of data log information to a data log platform or data structure, use of a remote procedure call (RPC) format (e.g., gRPC), a JavaScript Object Notation (JSON) format, a comma separated value (CSV) format, a serialized format, or another type of format. The set of permissions may include one or more authorization or authentication parameters, such as a user name, password, or token, among other examples, associated with accessing the data log.

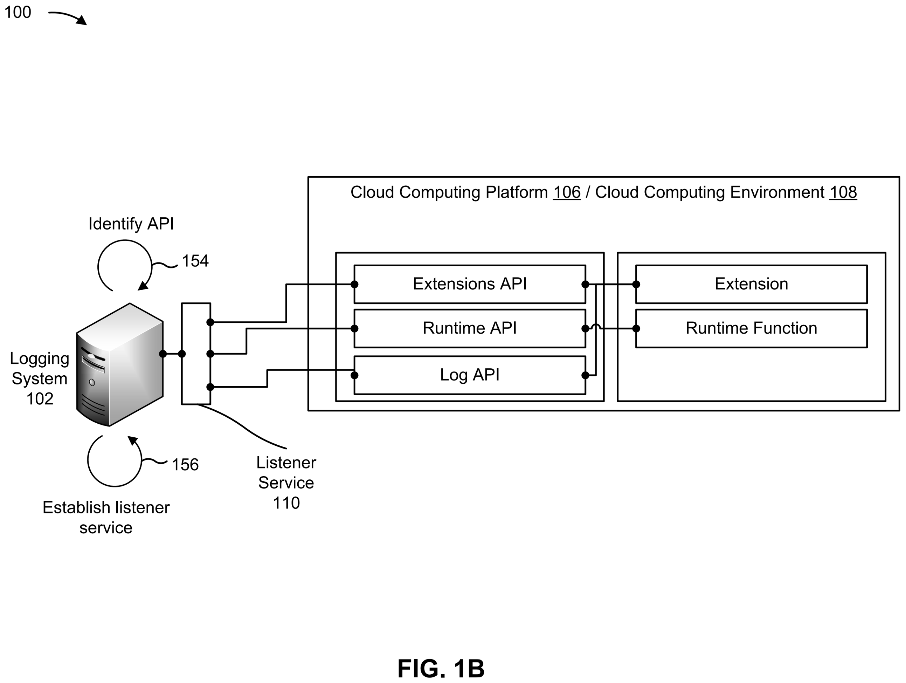

As shown in Fig. 1B, and by reference number 154, the logging system 102 may identify an API. For example, the logging system 102 may identify an API associated with the cloud computing platform 106 of the cloud computing environment 108. In some implementations, the logging system 102 may identify one or more different types of APIs associated with one or more different processes executing within the cloud computing environment 108 (e.g., executing on the cloud computing platform 106). For example, the logging system 102 may identify a runtime API associated with a runtime function, an extensions API associated with an extension, or a log API associated with the extension. In this case, the runtime function may include a FaaS function or Lambda function.

In some implementations, each API may be associated with a different type of output or data log stream. For example, a function log stream, obtained using the runtime API or the log API, may include one or more logs that a function generates and writes using an output print command (e.g., an output stream, such as *stdout*) or an error print command (e.g., an error stream, such as *stderr*)*.* Additionally, or alternatively, an extension log stream, obtained using the extensions API, may include one or more logs that extension code generates when an application, which includes extension code, is executed. Additionally, or alternatively, a platform log stream, which may be obtained using the runtime API, may include logs that a runtime platform generates (e.g., logs identifying events or errors relating to invocations or extensions).

As further shown in Fig. 1B, and by reference number 156, the logging system 102 may establish a listener service to obtain a data log. For example, the logging system 102 may establish the listener service 110 to receive data logs via the one or more identified APIs. The listener service 110 may include a computing resource that is configured, with a logic, to receive input for the logging system 102. For example, the logging system 102 may configure a network address to receive log data associated with a data log. In some implementations, the logging system 102 may configure authentication or authorization for the listener service 110. For example, the logging system 102 may use a token or other authentication or authorization technique to configure the listener service 110 to communicate using a secure communication channel, such as to use a secure sockets layer (SSL) for communication with the cloud computing platform 106 of the cloud computing environment 108.

In some implementations, the listener service 110 may use a platform extension to listen for the data log. For example, the listener service 110 may be configured to capture logs via an extension of a FaaS platform or Lambda platform. In some implementations, the listener service 110 may be implemented as a lambda layer extension. For example, the logging system 102 may configure the listener service 110 as a lambda layer extension that receives logs from lambdas and forwards the logs to a set of endpoints for storage. In some implementations, the logging system 102 may subscribe the listener service 110 to a lambda log API to receive logs asynchronously with execution of a lambda function.

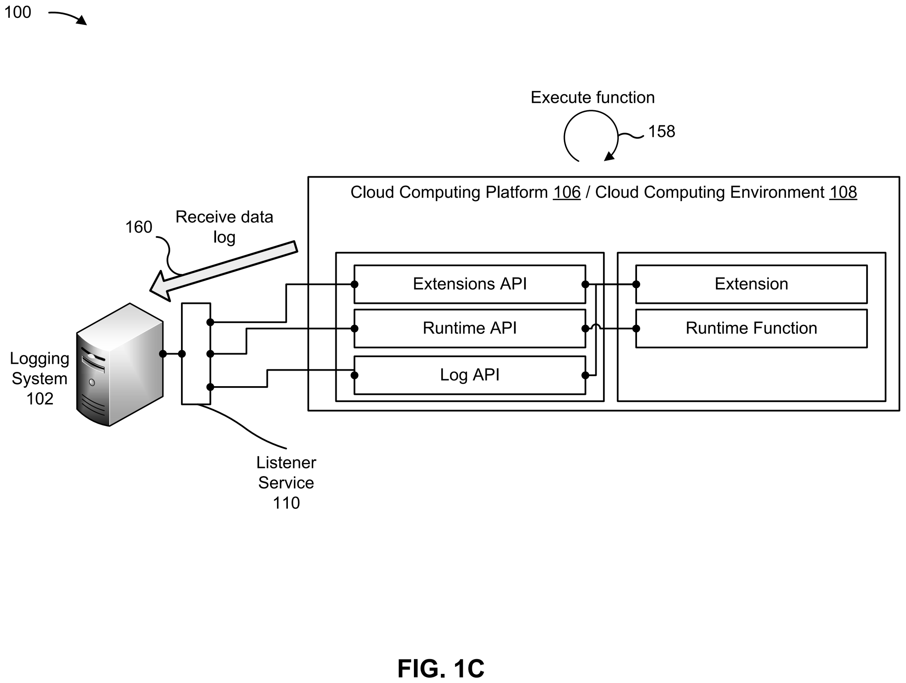

As shown in Fig. 1C, and by reference numbers 158 and 160, the cloud computing platform 106 may execute a function and the logging system 102 may receive log data. For example, the cloud computing platform 106 may run an application for which one or more functions execute and the listener service 110 may receive log data for the logging system 102.

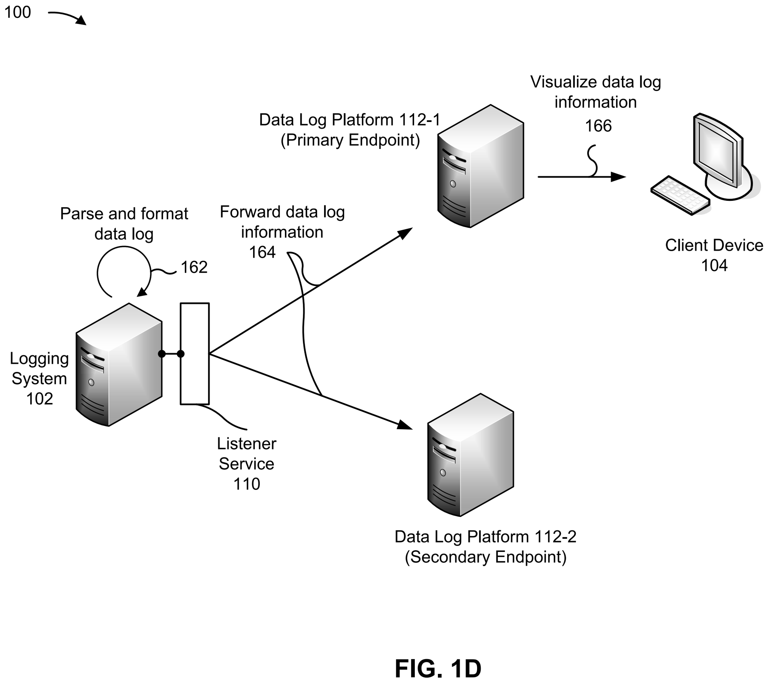

As shown in Fig. 1D, and by reference number 162, the logging system 102 may parse and format a data log. For example, the logging system 102 may parse received log data to determine a set of elements of the log data and may convert information identifying the set of elements of the log data into a data log with a particular format. In this case, the format may be selected for the data log platforms 112 (e.g., a primary endpoint or a secondary endpoint) based on one or more factors, such as a data storage efficiency factor, among other examples. For example, the logging system 102 may identify an initial format of the log data, identify a target format of the log data (e.g., based on one or more factors), transform information extracted from the log data from the initial format to the target format, and output the transformed log data as data log information. In some implementations, the logging system 102 may establish a logging agent at a destination (e.g., at a data log platform 112) to perform parsing and formatting of the logs. Additionally, or alternatively, the logging system 102 may establish a logging agent at the logging system 102 (e.g., in connection with or separate from the listener 110) that may perform parsing and formatting of the logs.

As further shown in Fig. 1D, and by reference number 164, the logging system 102 may forward data log information to the data log platforms 112. For example, the logging system 102 may provide a reformatted data log to the data log platform 112-1 (e.g., a primary endpoint) and to the data log platform 112-2 (e.g., a secondary endpoint) for data ingestion. In some implementations, the logging system 102 may forward the data log information to the primary endpoint. For example, the logging system 102 may be configured to forward the data log information to the primary endpoint (and not the secondary endpoint), and may switch to providing the data log information to the secondary endpoint (which may have a status changed to being the primary endpoint) when a failure occurs with the primary endpoint.

As further shown in Fig. 1D, and by reference number 166, the data log platform 112-1 may provide data log information for visualization. For example, the data log platform 112-1 may cause the data log information to be visualized via the client device 104. Additionally, or alternatively, the logging system 102 may recall the data log information (e.g., as a response to a request for visualization from the client device 104) and may generate a visualization that the logging system 102 provides for display via the client device 104.

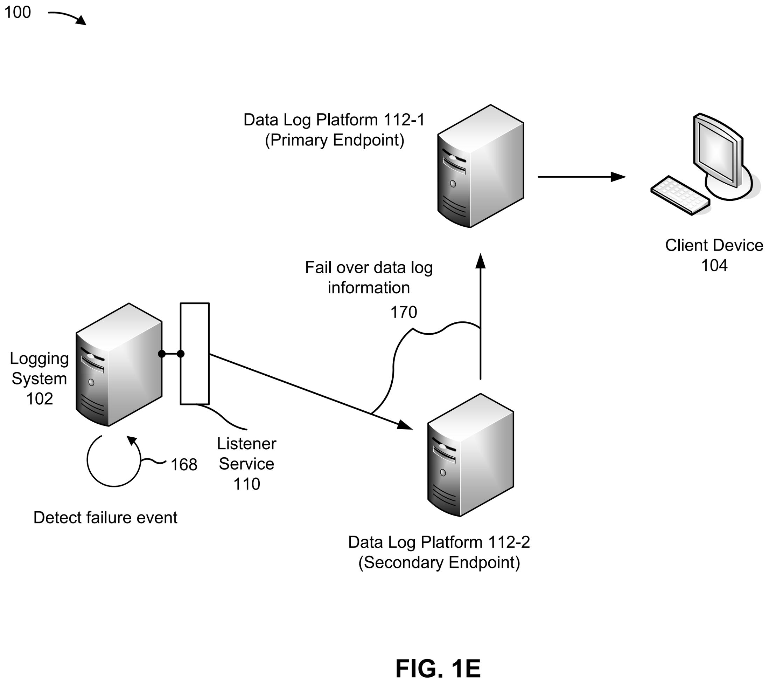

As shown in Fig. 1E, and by reference number 168, the logging system 102 may detect a failure event. For example, based on monitoring a status of the data log platforms 112, the logging system 102 may detect a failure event associated with the data log platform 112-1 (e.g., the primary endpoint). In some implementations, the logging system 102 may perform a failover from the primary endpoint to the secondary endpoint as an asynchronous process. Although some implementations are described herein in terms of a failure event for output of a data log platform 112, a failure event may occur for input of a data log platform 112. For example, when the data log platform 112-1 is unavailable for input for storing a data log as output from the logging system 102, the logging system 102 may failover from the data log platform 112-1 to the data log platform 112-2. In this case, the data log platform 112-2 may receive, as input, the data log for storage from the logging system 102.

As further shown in Fig. 1E, and by reference number 170, the logging system 102 may failover data log information from the data log platform 112-2 (e.g., the secondary endpoint) to the data log platform 112-1 (e.g., the primary endpoint). For example, the logging system 102 may cause data log information to be transferred from the data log platform 112-2 to the data log platform 112-1. Additionally, or alternatively, the logging system 102 may reassign the data log platform 112-2 from being a secondary endpoint to being a primary endpoint. Additionally, or alternatively, as described above, the logging system 102 may switch to using the data log platform 112-2 as an endpoint for receiving the data log information as a result of a detected failure. For example, the logging system 102 may switch the data log platform 112-2 to primary endpoint status and may provide the data log to the data log platform 112-2 as the primary endpoint.

As indicated above, Figs. 1A-1E are provided as an example. Other examples may differ from what is described with regard to Figs. 1A-1E. The number and arrangement of devices shown in Figs. 1A-1E are provided as an example. In practice, there may be additional devices, fewer devices, different devices, or differently arranged devices than those shown in Figs. 1A-1E. Furthermore, two or more devices shown in Figs. 1A-1E may be implemented within a single device, or a single device shown in Figs. 1A-1E may be implemented as multiple, distributed devices. Additionally, or alternatively, a set of devices (e.g., one or more devices) shown in Figs. 1A-1E may perform one or more functions described as being performed by another set of devices shown in Figs. 1A-1E.

Fig. 2 is a diagram of an example environment 200 in which systems and/or methods described herein may be implemented. As shown in Fig. 2, environment 200 may include a logging system 210, a cloud platform 220, which may be associated with a cloud computing environment 230, a primary endpoint 240, a secondary endpoint 250, a client device 260, and/or a network 270. Devices of environment 200 may interconnect via wired connections, wireless connections, or a combination of wired and wireless connections.

The logging system 210 may include one or more devices capable of receiving, generating, storing, processing, providing, and/or routing information associated with data logging, as described elsewhere herein. The logging system 210 may include a communication device and/or a computing device. For example, the logging system 210 may include a server, such as an application server, a client server, a web server, a database server, a host server, a proxy server, a virtual server (e.g., executing on computing hardware), or a server in a cloud computing system. In some implementations, the logging system 210 may include computing hardware used in a cloud computing environment.

The cloud computing environment 230 may include computing hardware, a resource management component, a host operating system (OS), and/or one or more virtual computing systems. The cloud computing environment 230 may execute on, for example, an Amazon Web Services platform, a Microsoft Azure platform, or a Snowflake platform. The cloud platform 220 may include one or more elements of the cloud computing environment 230, may execute within the cloud computing environment 230, and/or may be hosted within the cloud computing environment 230. In some implementations, the cloud platform 220 may not be cloud-based (e.g., may be implemented outside of a cloud computing system) or may be partially cloud-based. For example, the cloud platform 220 may include one or more devices that are not part of the cloud computing environment 230, such as device 300 of Fig. 3, which may include a standalone server or another type of computing device. The cloud platform 220 may perform one or more operations and/or processes described in more detail elsewhere herein.

The primary endpoint 240 may include one or more devices capable of receiving, generating, storing, processing, and/or providing information associated with a data log, as described elsewhere herein. The primary endpoint 240 may include a communication device and/or a computing device. For example, the primary endpoint 240 may include a data structure, a database, a data source, a server, a database server, an application server, a client server, a web server, a host server, a proxy server, a virtual server (e.g., executing on computing hardware), a server in a cloud computing system, a device that includes computing hardware used in a cloud computing environment, or a similar type of device. In some implementations, an endpoint (e.g., the primary endpoint 240 or the secondary endpoint 250) may include an enterprise log gateway, such as an open telemetry gateway. As an example, the primary endpoint 240 may store log data from an application, as described elsewhere herein.

The secondary endpoint 250 may include one or more devices capable of receiving, generating, storing, processing, and/or providing information associated with a data log, as described elsewhere herein. The secondary endpoint 250 may include a communication device and/or a computing device. For example, the secondary endpoint 250 may include a data structure, a database, a data source, a server, a database server, an application server, a client server, a web server, a host server, a proxy server, a virtual server (e.g., executing on computing hardware), a server in a cloud computing system, a device that includes computing hardware used in a cloud computing environment, or a similar type of device. As an example, the secondary endpoint 250 may store log data from an application, as described elsewhere herein.

The client device 260 may include one or more devices capable of receiving, generating, storing, processing, and/or providing information associated with a data log, as described elsewhere herein. The client device 260 may include a communication device and/or a computing device. For example, the client device 260 may include a wireless communication device, a mobile phone, a user equipment, a laptop computer, a tablet computer, a desktop computer, a wearable communication device (e.g., a smart wristwatch, a pair of smart eyeglasses, a head mounted display, or a virtual reality headset), or a similar type of device.

The network 270 may include one or more wired and/or wireless networks. For example, the network 270 may include a wireless wide area network (e.g., a cellular network or a public land mobile network), a local area network (e.g., a wired local area network or a wireless local area network (WLAN), such as a Wi-Fi network), a personal area network (e.g., a Bluetooth network), a near-field communication network, a telephone network, a private network, the Internet, and/or a combination of these or other types of networks. The network 270 enables communication among the devices of environment 200.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of a device 300 associated with data logging for cloud platforms. The device 300 may correspond to logging system 210, cloud platform 220, primary endpoint 240, secondary endpoint 250, and/or client device 260. In some implementations, logging system 210, cloud platform 220, primary endpoint 240, secondary endpoint 250, and/or client device 260 may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

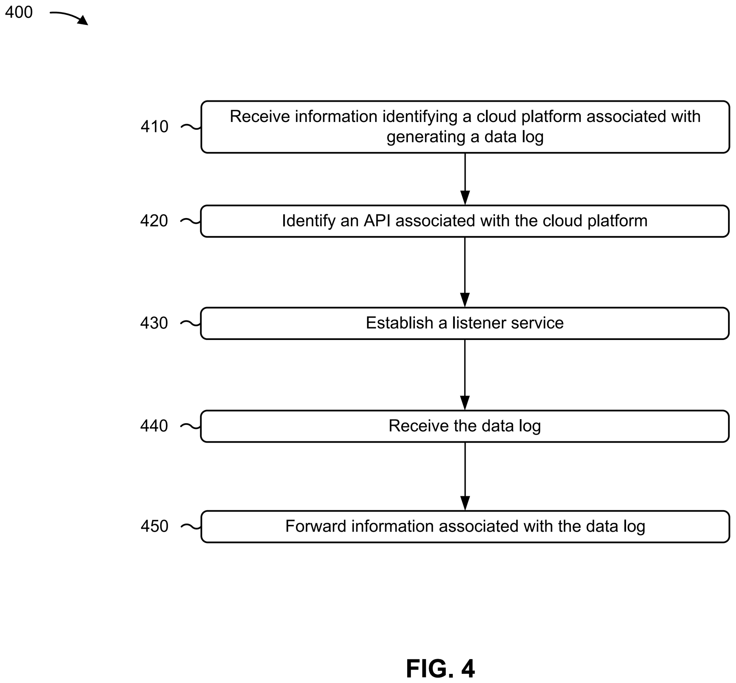

Fig. 4 is a flowchart of an example process 400 associated with data logging for cloud platforms. In some implementations, one or more process blocks of Fig. 4 may be performed by the logging system 210. In some implementations, one or more process blocks of Fig. 4 may be performed by another device or a group of devices separate from or including the logging system 210, such as the cloud platform 220, the primary endpoint 240, the secondary endpoint 250, or the client device 260. Additionally, or alternatively, one or more process blocks of Fig. 4 may be performed by one or more components of the device 300, such as processor 320, memory 330, input component 340, output component 350, and/or communication component 360.

As shown in Fig. 4, process 400 may include receiving information identifying a cloud platform associated with generating a data log (block 410). For example, the logging system 210 (e.g., using processor 320, memory 330, input component 340, and/or communication component 360) may receive information identifying a cloud platform associated with generating a data log, as described above in connection with reference number 150 of Fig. 1A. As an example, the logging system 210 may receive a configuration file that includes information identifying the cloud platform, a set of endpoints for data logging, a format for data logging, or an application for data logging.

As further shown in Fig. 4, process 400 may include identifying an API associated with the cloud platform (block 420). For example, the logging system 210 (e.g., using processor 320 and/or memory 330) may identify an application programming interface (API) associated with the cloud platform, as described above in connection with reference numbers 152 and 154 of Figs. 1A and 1B, respectively. As an example, the logging system 210 may parse a configuration file to extract configuration information, which identifies an API, from the configuration file. As another example, the logging system 210 may use information in the configuration file identifying an application to identify an API associated with the application.

As further shown in Fig. 4, process 400 may include establishing a listener service (block 430). For example, the logging system 210 (e.g., using processor 320 and/or memory 330) may establish, using the API associated with the cloud platform, a listener service associated with receiving the data log asynchronously to an execution of a particular type of function in a cloud environment associated with the cloud platform, as described above in connection with reference number 156 of Fig. 1B. As an example, the logging system 210 may establish the listener service in connection with one or more APIs of an application for which logging is to be performed.

As further shown in Fig. 4, process 400 may include receiving the data log (block 440). For example, the logging system 210 (e.g., using processor 320, memory 330, input component 340, and/or communication component 360) may receive, based on establishing the listener service and based on the execution of the particular type of function, the data log, as described above in connection with reference number 160 of Fig. 1C. As an example, the logging system 210 may receive the data log using the listener service, such as using a push/pull functionality of the listener service, a query/response functionality of the listener service, a data stream functionality of the listener service, a packet inspection functionality of the listener service, or another type of functionality.

As further shown in Fig. 4, process 400 may include forwarding information associated with the data log (block 450). For example, the logging system 210 (e.g., using processor 320 and/or memory 330) may forward, to a primary endpoint associated with a data log platform and a failover endpoint associated with a data storage platform, and based on receiving the data log, information associated with the data log, as described above in connection with reference number 164 of Fig. 1D. As an example, the logging system 210 may reformat the received data log and may forward the reformatted data log to a primary endpoint and/or a secondary endpoint (e.g., a fallback endpoint).

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel. The process 400 is an example of one process that may be performed by one or more devices described herein. These one or more devices may perform one or more other processes based on operations described herein, such as the operations described in connection with Figs. 1A-1D. Moreover, while the process 400 has been described in relation to the devices and components of the preceding figures, the process 400 can be performed using alternative, additional, or fewer devices and/or components. Thus, the process 400 is not limited to being performed with the example devices, components, hardware, and software explicitly enumerated in the preceding figures.

The foregoing disclosure provides illustration and description, but is not intended to be exhaustive or to limit the implementations to the precise forms disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The hardware and/or software code described herein for implementing aspects of the disclosure should not be construed as limiting the scope of the disclosure. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination and permutation of those items, including single members. As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list). As an example, "a, b, and/or c" is intended to cover a, b, c, a-b, a-c, b-c, and a-b-c.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A system for cloud platform data logging, the system comprising:
one or more memories; and
one or more processors, communicatively coupled to the one or more memories, configured to:
receive information identifying a cloud platform associated with generating a data log;
identify an application programming interface (API) associated with the cloud platform;
establish, using the API associated with the cloud platform, a listener service associated with receiving the data log asynchronously to an execution of a particular type of function in a cloud environment associated with the cloud platform;
receive, based on establishing the listener service and based on the execution of the particular type of function, the data log; and
forward, to a data log platform and based on receiving the data log, information associated with the data log.

2. The system of claim 1, wherein the one or more processors are further configured to:
parse the data log based on receiving the data log; and
wherein the one or more processors, to forward the information associated with the data log, are configured to:
forward information extracted by parsing the data log.

3. The system of claim 1 or 2, wherein the one or more processors are further configured to:
identify an initial format of the data log based on receiving the data log;
identify a target format for the data log platform; and
transform information extracted from the data log in the initial format to the target format; and
wherein the one or more processors, to forward the information associated with the data log, are configured to:
forward information extracted from the data log in the target format.

4. The system of any one of the preceding claims, wherein:
(a) the data log includes a function log, and wherein the function log includes information identifying an output stream or an error stream associated with the particular type of function; and/or
(b) the data log includes an extension log, and wherein the extension log includes information identifying an output of an extension to the particular type of function; and/or
(c) the data log includes a platform log, and wherein the platform log includes information identifying an output of the cloud platform in connection with the execution of the particular type of function.

5. The system of any one of the preceding claims, wherein the particular type of function is a runtime function associated with a runtime API.

6. A non-transitory computer-readable medium storing a set of instructions, the set of instructions comprising:
one or more instructions that, when executed by one or more processors of a system, cause the system to:
receive a configuration file identifying a set of configuration settings for data logging of a runtime function associated with execution in a cloud computing environment of a cloud platform;
extract, from the configuration file, the set of configuration settings;
configure, using the set of configuration settings, a listener service associated with receiving a data log in connection with an execution of the runtime function in the cloud environment associated with the cloud platform;
receive, based on establishing the listener service and based on the execution of the runtime function, the data log; and
forward, to a data log platform and based on receiving the data log, information associated with the data log.

7. The non-transitory computer-readable medium of claim 6, wherein the set of configuration settings includes one or more parameters identifying at least one of:
an application name for the runtime function,
a primary endpoint for the data log,
a secondary endpoint for the data log,
a format for at least one endpoint for the data log, or
a set of permissions associated with access to the data log.

8. The non-transitory computer-readable medium of claim 6 or 7, wherein the runtime function is a lambda function.

9. The non-transitory computer-readable medium of any one of claims 6 to 8, wherein the one or more instructions, when executed by the one or more processors, cause the system to:
forward, to a failover storage component, the information associated with the data log;
identify, using an asynchronous processor, an event associated with the data log; and
transfer the data log from the failover storage component to the data log platform.

10. The non-transitory computer-readable medium of any one of claims 6 to 9, wherein the data log includes at least one of: an extension log, a platform log, a function log, or an output of the runtime function.

11. The non-transitory computer-readable medium of any one of claims 6 to 10, wherein the one or more instructions, that cause the system to forward the information associated with the data log to the data log platform, cause the system to:
forward the data log to a primary target and a secondary target.

12. A method, comprising:
receiving, by a device, information identifying a cloud platform associated with generating a data log;
identifying, by the device, an application programming interface (API) associated with the cloud platform;
establishing, by the device and using the API associated with the cloud platform, a listener service associated with receiving the data log asynchronously to an execution of a particular type of function in a cloud environment associated with the cloud platform;
receiving, by the device and based on establishing the listener service and based on the execution of the particular type of function, the data log; and
forwarding, by the device, to a primary endpoint associated with a data log platform and a failover endpoint associated with a data storage platform, and based on receiving the data log, information associated with the data log.

13. The method of claim 12, further comprising:
parsing the data log based on receiving the data log; and
wherein forwarding the information associated with the data log comprises:
forwarding information extracted from parsing the data log.

14. The method of claim 12 or 13, further comprising:
identifying an initial format of the data log based on receiving the data log;
identifying a target format for the data log platform; and
transforming information extracted from the data log in the initial format to the target format; and
wherein forwarding the information associated with the data log comprises:
forwarding information extracted from the data log in the target format.

15. The method of any one of claims 12 to 14, wherein:
(a) the data log includes a function log, and wherein the function log includes information identifying an output stream or an error stream associated with the particular type of function; and/or
(b) the data log includes an extension log, and wherein the extension log includes information identifying an output of an extension to the particular type of function; and/or
(c) the data log includes a platform log, and wherein the platform log includes information identifying an output of the cloud platform in connection with the execution of the particular type of function.
